# EUROPEAN PATENT SPECIFICATION

(11) **EP 2 342 671 B1**
(45) Date of publication and mention of the grant of the patent: **04.01.2017**
(21) Application number: 09756415.7
(22) Date of filing: 16.10.2009
(51) Int. Cl.: G06F 21/00, H04L 29/06

(54) **METHOD FOR INFORMATION INTERACTION AND SECURE DEVICE**
VERFAHREN FÜR INFORMATIONSINTERAKTION UND SICHERES GERÄT
PROCÉDÉ D'INTERACTION D'INFORMATIONS ET DISPOSITIF SÉCURISÉ

(30) Priority: 17.10.2008 CN 200820209963 U; 24.10.2008 CN 200810174938
(43) Date of publication of application: 13.07.2011
(73) Proprietor: Giesecke & Devrient GmbH, 81677 München (DE)
(72) Inventor: XIAO, Wei, Union City CA 94587 (US); ZHU, Shifeng, Beijing 100024 (CN); GENG, Tong, Beijing 100044 (CN)
(74) Representative: Niedermeier, Peter
(86) International application number: PCT/EP2009/007447
(87) International publication number: WO 2010/043410

(56) References cited:
- EP-A1- 1 773 018
- WO-A1-02/082387
- WO-A2-96/00485
- WO-A2-2007/107868

## Description

### FIELD OF INVENTION

This invention relates to security technology, especially a method for information interaction and a secure device.

### BACKGROUND OF THE INVENTION

Due to nowadays network infrastructure, network based application, such as online banking, E-commerce, E-government, stock, online gaming become more and more popular. Due to the characteristic of the network infrastructure, the security on the network has become an important issue. To make the application and the according application systems secure, a variety of secure devices such as digital signature device are widely used in different area.

The main function of such a secure device is to save digital certificates, to authenticate and to make signatures. Following a description about a digital signature device as a secure device is given.

At least to some extent, the technology of digital signatures has made the information transmission secure inside a network and furthermore has made authentications of a client valid inside a network. Due to the widely use of such digital signature technologies, a hackers software to manipulate this technology has upgraded. In conclusion the attacks of hackers to manipulate the transmission on the network have been more diversified. A very common attack is the try to obtain the personal identification number, PIN of a client's user to make vicious signature. Also some hackers try to intercept the information or data transmission on the network and falsify those transaction data.

Following an attacked universal serial bus, USB - key scenario is described. If a secure device, such as a digital signature device is inserted into the USB interface of the client, a connection between this secure device and the client is established. Now, a client's user might send authentication data and signature relating operation information to the secure device through the client. Relating operation information in concern to online banking are e.g. transaction bank account and transaction amount. To generate a digital signature onto the operation information, the client's user inputs his PIN of the secure device by using the client's keyboard. Afterwards the PIN information is send to the secure device. The secure device will check whether the PIN is correct or not. If the PIN is correct the secure device will authorize the client's user to login in the network. Now the client's user is able to establish secure socket links, SSL and to do digital signatures. If the PIN is incorrect, the user interface, UI on the client will denote the user to re-input the PIN. After the elapse of a predefined amount of time for inputting the correct PIN, the secure device will lock itself.

As described above, the secure device does not authenticate the authentication data and signature relating operation information. Only if the client's user inputs the data in a correct format, the client will obtain response from the secure device. This is the weakness of the secure device, where hackers can attack the secure device.

Following a hacker's attack scenario is described: If the client sends the signature relating operation information to the secure device, a manipulating software as for example a Trojan horse virus or fishing program hidden behind the client will monitor this signature information, intercept this the signature relating operation information and send to the hacker.

The hacker then falsifies the critical data in the signature relating operation information and sends the falsified signature relating operation information to the secure device through the Trojan horse virus or fishing program. Since this signature relating operation information cannot be authenticated by the secure device, the falsified relating operation cannot be detected by the client's user. In case of an online banking application, the signature relating operation information may be transaction account or transaction amount.

If the user has inputted the PIN correct once, the secure device will consider the falsified signature relating operation information as the legal signature relating operation information. Furthermore, if the PIN is inputted through the keyboard of the client after the PIN is checked, all following operations will regarded legally by the secure device. The client's user has no further influence to monitor the falsified information.

This weakness of the secure device is also used by hackers to attack the secure device in the following way: When the client's user inputs the PIN with the keyboard of the client, the Trojan horse virus or fishing program hidden behind the client will easily get the PIN information and send it the hacker. After the hacker gets the PIN information, he will control the operation of the client through the hacker software. If the client's user inserts the secure device into the personal computer, PC and leaves the PC in operation, the hacker is able to control the PC and falsified authorize transactions dealing with the secure device and PIN information taken before.

In the Chinese patent application: applied no. 200510132752.4, publication no. CN 1216330C, a kind of digital signature device and method is described. Reference to this document is made herein.

EP 1 773 018 A1 describes a security device which comprises input means for inputting users personal information by a user of the device. The personal information is combined with a authentication base number, generated by the device and transmitted to a terminal device. The terminal device then proceeds with the operation, wherein the user needs to input operation information on the terminal, which might be unsecure.

### OBJECTS AND SUMMARY OF THE INVENTION

The object of this invention is to provide a secure device and a method, which assures a secure transmitting of data or information in a network and which assures the protection of information from being falsified or intercepted by a hacker's software. The method therefore suggests that the operating information, PIN information or other authorizing information are inputted at the secure device instead of the client. Furthermore the suggested secure device is simple, portable and a low cost item.

To attain this object, this invention provides a method for information interaction comprising the steps: Receiving the operation command from the client and inputting the operating information according to the said operation command at a secure device; Judging whether the client's user confirms the operating information; Inputting of authorizing information at the secure device for obtaining of authentication of the user; wherein the process of obtaining the authentication of the user includes: Accepting the authentication password inputted by the user; Judging the authentication is OK if the password is right; Encrypting the operating information and sending the encrypted operating information to the client if the judging result is a YES.

To attain this object, the invention advantageously suggests a processing of the operating information by a secure device to generate a check code for information checking, wherein said operating information and said check code are sent to the client.

To attain this object, this invention also provides a secure device comprising a first receiving unit, configured to receive the operation command sent from the client; a input unit, configured to input operating information according to the operation command; a judge unit, configured to judge whether a client user confirms the operating information; an authentication unit, configured to authenticate a user, wherein the authentication includes a second input unit configured to input authentication data; an encryption unit, configured to encrypt the operating information with a symmetric encryption key if the judge unit results a YES; and a sending unit, configured to send the encrypted operating information to the client.

The advantage of this invention is that the information is made securer and hackers are unable to falsify or intercept the information because all critical data such as operating information, PIN data etc. are inputted by the secure device directly. This will solve the above problems and this secure device is simple, portable and a low cost item.

### BRIEF DESCRIPTION OF THE INVENTION

In the Figures there is shown:
- Fig. 1: One implementation of the secure device
- Fig. 2: Another implementation of the secure device
- Fig. 3: A authentication unit according to Fig.2
- Fig. 4: A flowchart according to a method of information interaction
- Fig. 5: A flowchart according to a method of information interaction according to yet another implementation
- Fig. 6: A flowchart of an account transfer process
- Fig. 7: A flowchart of a batch accounts transfer process

### DETAILED DESCRIPTION OF THE INTENTION

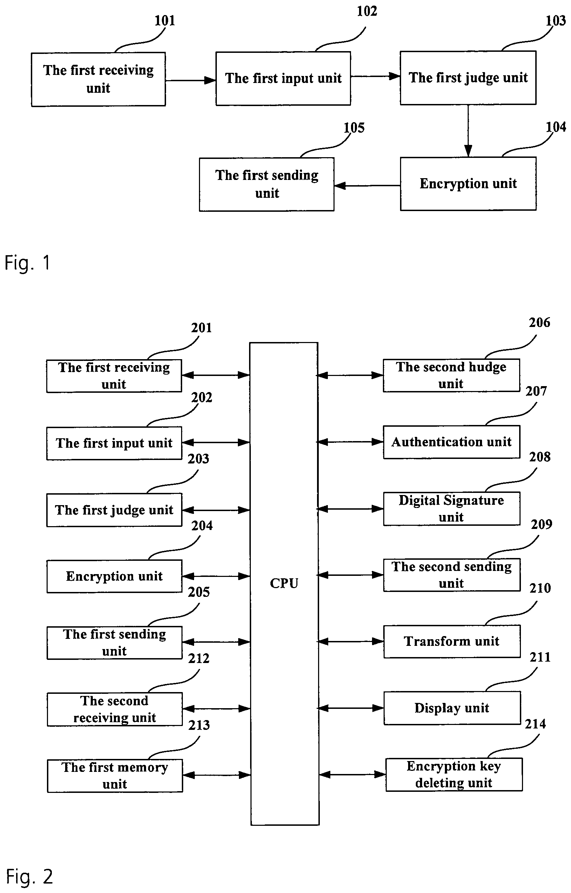

As shown in the Fig. 1, the secure device consists of a first receiving unit 101, a first input unit 102, a first judge unit 103, an encryption unit 104 and a first sending unit 105, wherein the first receiving unit 101 receives the operation command sent from the client; the first input unit 102 inputs operating information according to the operation command; the first judge unit 103 judges the confirmation from the user's operation. The encryption unit 104, if the result of the judge unit is "Yes", then encrypts the operating information with a symmetric encryption key. The first sending unit 105 sends the encrypted operating information to the client. The said first input unit 102 is a keyboard with press key or touch screen.

In this implementation, which might be an online banking application, the operating information may be account or transaction data. Alternatively, if a batch account is processed, it is impossible to input all information through the secure device, due to the large data size. Therefore, only a check code of the batch account needs to be inputted. In this case, the operating information is a check code. The encryption key to encrypt the operating information is a pre-saved key. The pre-saved key is received by diversifying the series number of the secure device. Alternatively, the encryption key might be downloaded from the server through the client.

By inputting of data and encrypting of data with the secure device, the sending out information is encrypted data. Since the user does not operate on the client, a Trojan horse from a hacker has no way to attack the secure device. So the Trojan horse cannot intercept the plaintext in the secure device. Even if the hacker intercepts the encrypted data, it is very difficult for the secure device to decrypt it. In this way, the loss of money of the client's user will be avoided. So the secure device is keeping the data in integrity and security. The secure level is improved. And more, the secure device is simple and low cost.

This secure device may be used alone, communicating with the client through a wireless or wired interface. This secure device can also be an attachment of the portable device. The secure device is e.g. a chip card.

As shown in Fig. 2, the secure device consists of the first receiving unit 201, the first input unit 202, the first judge unit 203, the encryption unit 204 and the first sending unit 205, a second judge unit 206, which judges whether a Digital Signature is to be attached to the encrypted information. An authentication unit 207 will make a user authentication if the result of the second judge unit is "Yes". A digital Signature unit 208 will add the digital signature to the encrypted information if the user authentication is passed. The second sending unit 209 sends the encrypted information with digital signature to the client. In this way, the digital signature will be added to the operating information. It is impossible to falsify or deny the operating information. All the above unit of Fig. 2 can be controlled by a CPU or by a CPU IC card.

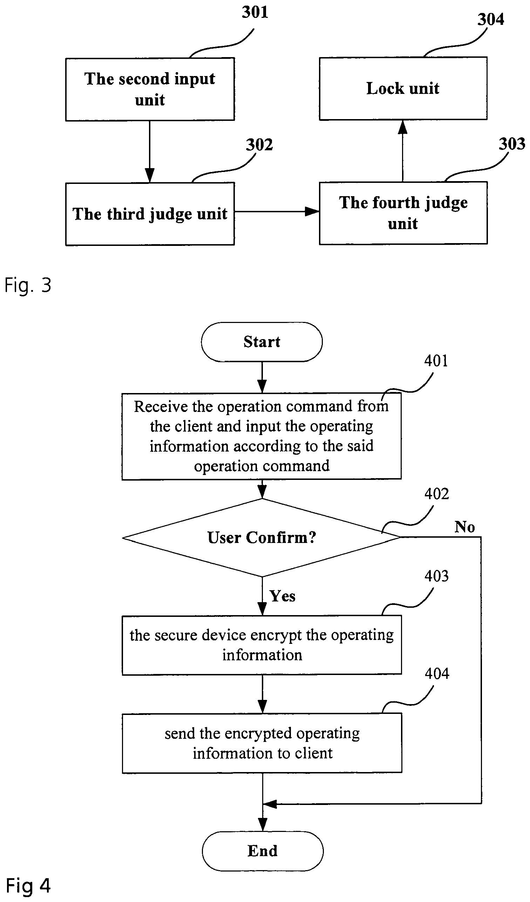

Fig.3 is the authentication unit in the Fig.2. The said authentication unit 207 also includes a second input unit 301, which provides an interface for the client's user to input the password for authentication purpose. The third judge unit 302 judges whether the password is right or not. If the password is right, the authentication is passed. Since the password is inputted by the secure device, the Trojan horse cannot intercept the password.

The password may be PIN information. If the PIN is correct then the authentication is passed. If the PIN is not correct and if the times of inputting PIN is over a predefined value the secure device will be locked.

The secure device may also include the fourth judge unit 303. If the result of the said third judge unit is "No" then the said fourth judge unit 303 will judge whether the number of times which user inputted password overpass the predefined value. A lock unit 304 will lock the secure device, if the result of fourth unit is "Yes".

The said secure device also includes a transform unit 210, which transforms the inputted data or password into characters. A display unit 211 is inserted for displaying the said characters. For example, the inputted data is transformed into character "*". Then the Display unit 211 display the character "*". The display unit 211 can also be used to display the operating information inputted by the first input unit 301.

Furthermore, to simplify the secure device, the secure device may have no display unit 211. The operating information or authentication code can be send to the client to display the inputted information, and the user can update the inputted information through the first input unit 202.

The first input unit 202 and the second input unit 301 can be implemented by keyboard, which includes these press keys to input account information, account amount and PIN etc.: digital 0-9, dot, OK, cancel, backspace, clear.

As shown in Fig.2, the secure device also includes the second receiving unit 212 and the first memory unit 213. The second receiving unit 212 downloads the symmetric key from the server through the client. The first memory unit 213 saves this symmetric key. In this case, the encryption unit 204 uses this symmetric key to encrypt the operating information.

In the above implementation, the secure device downloads the symmetric key from the server through the client and encrypts the critical operating information with this symmetric key. The symmetric key is generated by the server and is sent to the secure device through the client. Then the critical information is encrypted and is sent to the server. The server is able to decrypt the encrypted critical information.

In this implementation, the symmetric key may be a session key. Therefore a at each application deal the server generates a session key and sends it to the secure device. The secure device deletes the session key after it encrypt the operating information. In this way, the session key will not exist in the secure device for a long time, and protect it from attacking by the hacker with violent force method. The symmetric key is generated by the server. After the secure device gets the symmetric key, it saves it in a private location of the first memory unit 214. The client will have no access rights to get the plaintext of the session key in the secure device.

The said critical information, which needs to be encrypted by the session key, can be saved in a special location of the first memory unit 214 and the client will only have read right to this location to avoid the hacker falsifying the operating information.

In addition, to ensure the security of the symmetric key, after the symmetric key is generated by the server, it is encrypted by the public key of the user. The encrypted symmetric key is sent to the secure device through the client. In this case, the secure device includes a fourth receiving unit, a decryption unit and a second memory unit (not shown on the fig.). Where, the fourth receiving unit receives the encrypted symmetric key, the decryption unit decrypts the encrypted symmetric key to get the symmetric key. The second memory unit then saves this symmetric key.

Furthermore, as shown in Fig. 2, the secure device also includes key a deleting unit 214. After the transmission process is finished, the key deleting unit 214 will delete the symmetric key. So, this can protect the symmetric key being attacked by the attacker by violent force attacking method.

As said above, the operating information and password is inputted by the secure device and there is no input information on the client. The hacker has no way to intercept the plaintext of the operating information. Even if the hacker intercepts the encrypted operating information, he cannot decrypt the information. Therefore the falsifying of the operating information is impossible. In this way, the security is improved and the secure device is simple and low cost.

The secure device consists of the fourth receiving unit, the third input unit, the fifth judge unit, the processing unit and the third sending unit. The fourth receiving unit receives the operation command from the client. The third input unit, inputs operating information according to the said operation command. The fifth judge unit judges whether the user confirm the inputted information. The processing unit processes the inputted information to generate the checking information, if the result of the fifth judge unit is "Yes". The third sending unit sends the operating information and checking information to the client.

The difference between the implementation of Figure 1 and the implementation just described is following. This implementation does not encrypt the key directly, but processes the operating information. That is possible with the use of the predefined key to generate the check code of the information with certain algorithm. Then the operating information and check code is sent to the server via the client. When the server receives this operating information and check code, it uses the same algorithm as in the secure device to generate check code. Then the server judges whether the generated check code is the same as the received check code. If it is the same then the operating information is true and is not falsified.

The implementation shown in Figure 4 provides a method for information interaction: The method comprises of receiving the operation command from the client and inputting the operating information according to the said operation command (Step 401), judging whether the client user confirm the operating information (Step 402), If the judging results in YES then the secure device encrypts the operating information (Step 403) and sends the encrypted operating information to client (Step 404).

In this implementation, for example a online transaction, the operating information may be key information such as the account, transaction data etc. In case of a batch process, the operating information may be the check code. As said above, by inputting and encrypting the operating information through the secure device, the spam or virus cannot attack the secure device because the user does not input the operating information on the client. So the spam cannot know the plaintext. The output of the secure device is encrypted data, which is indecipherability, leading to not falsify nor fake. The password and operating information is kept secure and the security level network application system is improved.

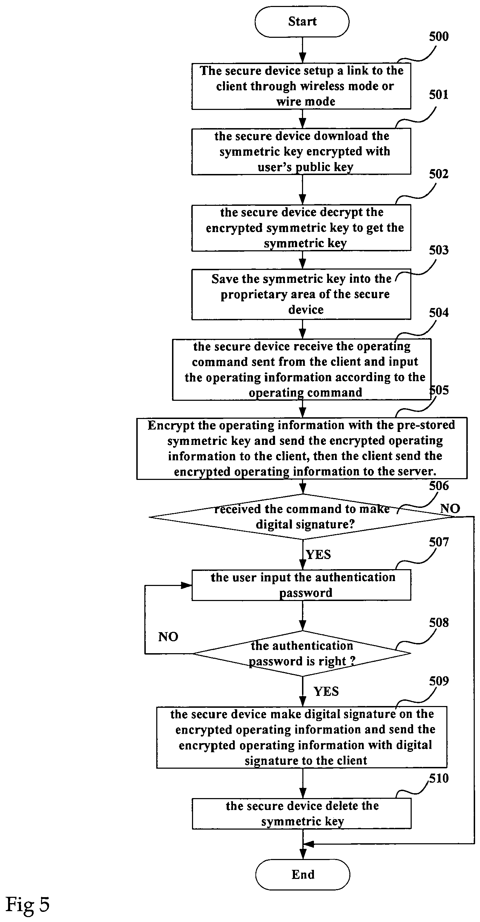

This implementation provides a method for information interaction which is based on the secure device according to figure 2. Figure 5 describes the appropriate method. In step 500, the secure device sets up a link to the client through wireless mode or wire mode. In step 501, the secure device downloads the symmetric key encrypted with a user's public key. The symmetric key is a temporary processing key and is downloaded once in each transaction. In step 502, the secure device decrypts the encrypted symmetric key to get the symmetric key. In step 503 the symmetric key is saved into the proprietary area of the secure device. The client has no way to get the information stored in the proprietary area. In step 504, the secure device receive the operating command sent from the client and inputs the operating information according to the operating command. The operating information includes account, money amount etc. The operating information may also be the check code in the batch transaction case. In step 505 the operating information is encrypted with the pre-stored symmetric key. The encrypted operating information is send to the client. The client sends the encrypted operating information to the server. Furthermore, the secure device may save the encrypted operating information into a special location of the memory. This special location of memory is read-only for the client. This way is useful to avoid the possible attack from the client. In step 506 it is judged whether the received command needs to make a digital signature on the encrypted operating information. If the result of step 506 is YES, then in step 507 the authentication is done at first. Therefore the user inputs the authentication password through the input unit of the secure device. The authentication password may be the PIN of the secure device. In step 508 the secure device receives the authentication password. It is now judged whether the authentication password is right or not. If the authentication password is right then the authentication is passed. The user may be approved to access the website, setup secure link channel, or make digital signature etc. In step 509, the secure device makes digital signature on the encrypted operating information and sends the encrypted operating information with a digital signature to the client. The client then sends the encrypted operating information with digital signature to the server.

If the authentication password is not right the authentication is not passed. The user may input the authentication password again. By the way, to avoid the possible attack of hacker in the step 506, the secure device will judge whether the count number to input password exceed the predefined value, if the authentication password is not right. If the account number exceeds the predefined value then the secure device is locked to keep the security. In step 510, the secure device deletes the symmetric key. Furthermore, in the steps 504 and 507, the secure device may convert the inputted operating information into the character such as "*" and display the character on the display unit of the secure device to make it convenient for the user.

In the step 504, the secure device may send the inputted operating information such as the account, money amount etc. to the client for display purposes. If the displayed content is right then the inputted information is right. The user then confirms the operating information. In step 505 the secure device may check the check code using the symmetric key to assure the integrity of the inputted information and send the check code to the client. The client then sends the check code to the server. The server adopts the same algorithm to make another check code and compares this check code with the check code sent from the secure device. If the comparison concludes, that the same check code was used, then the operating information is not updated. It is also possible to combine the method for encrypting the operating information and the method for generating the check code and use them at the same time.

As said above, by inputting and encrypting the operating information, the spam or virus cannot attack the secure device because the user do not input the operating information on the client. So the spam cannot know the plaintext. The output of the secure device is encrypted data, which is indecipherability. The password and operating information is kept secure and the security level network application system is improved.

Now, based on the above secure device and the practical application in the online transaction PKI system, the process of a single account transfer transaction and the process of batch account transfer are described in detail.

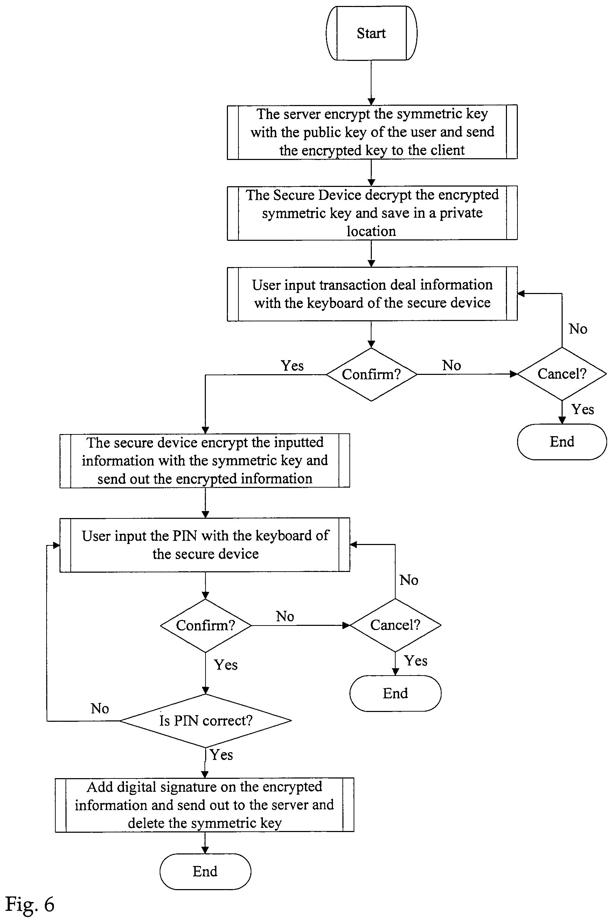

The flowchart of a single account transfer transaction is shown in Fig. 6. The digital signature device is connected to the client. In this implementation, it may be USB Key digital signature device, where using the USB interface to connect the client. When the transaction is started, the server generates a symmetric key, encrypts the symmetric key with the public key of the user and sends the encrypted symmetric key to the digital signature device via the client. The digital signature device decrypt the encrypted symmetric key with a private key to get the symmetric key and save it in the private location of the digital signature device.

Then the user inputs the transaction information via the keyboard of the digital signature device. The transaction information includes account information, account amount etc. To make it feasible for the user to operate, the displaying information on the secure device is the same as the client's user inputted information. That is the display show the information the user input. After the user press a confirm button, the digital signature device encrypts the inputted information with the symmetric key and sends the encrypted information to the server via the client. Now the authentication step is started. The user inputs the PIN via the keyboard of the digital signature device. To make it feasible for the user to operate, the displaying information on the secure device is relevant to what the user input. That is the displayer show the "*" character after inputting each information the user input. After inputting of the PIN and pressing the confirm button, the device will check the PIN. If the PIN is correct then the device will add a digital signature to the encrypted transaction information and delete the symmetric key.

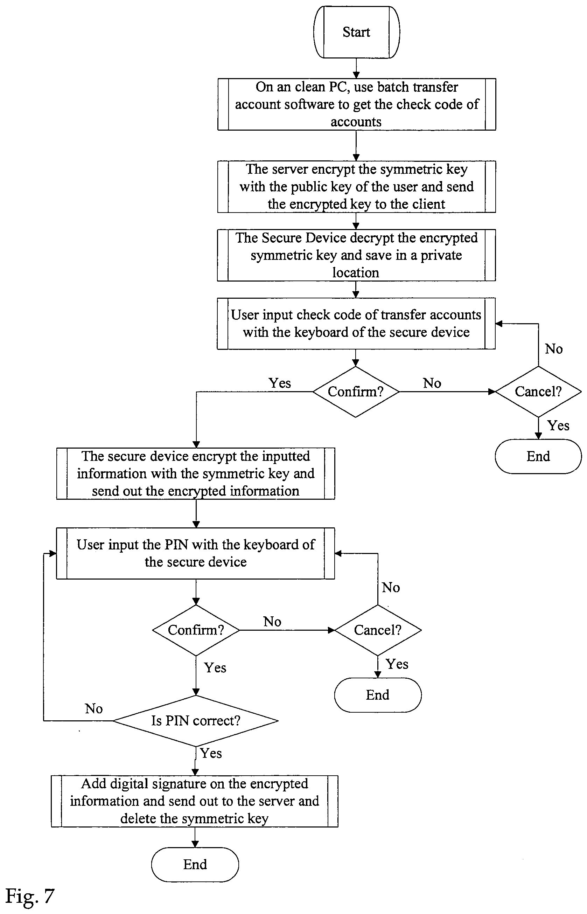

The flowchart of a batch account transfer is shown in the Fig.7. The digital signature device is connected to the client. In this implementation, it may be a USB Key digital signature device, where the USB interface is used to connect it to the client. The user generates the check code of the batch accounts using a batch account transfer tool.

When starting the transaction, the server generates a symmetric key and encrypts the symmetric key with the public key of the user and sends the encrypted symmetric key to the digital signature device via the client. The digital signature device decrypts the encrypted symmetric key with a private key to get the symmetric key and saves it in the private location of the digital signature device. Then the user inputs the check code of the batch accounts via the keyboard of the digital signature device. To make it feasible for the user to operate, the displaying information on the secure device is the same as the users input information. After the user presses the confirm button, the digital signature device encrypts the inputted information with the symmetric key and sends the encrypted information to the server via the client.

Now the authentication step starts. The user inputs the PIN via the keyboard of the digital signature device. To make it feasible for the user to operate, the displaying information on the secure device is relevant to what the user input. That is the displayer show the "*" character after inputting each information the user input. After the input of the PIN and pressing of the confirm button, the device will check the PIN. If it is correct then the device will add a digital signature to the encrypted transaction information and delete the symmetric key. Then all process is completed.

As said above, the operating information and password is inputted by the secure device and there is no input information on the client, the hacker has no way to intercept the plaintext of the operating information. Even if the hacker intercepts the encrypted operating information, he cannot decrypt the information. In this way, the security is improved and the secure device is simple and low cost.

## Claims

1. A method for information interaction comprising the method steps:
- Receiving an operation command from a client and inputting operating information according to the said operation command (step 401) at a secure device;
- Judging whether a client user confirms the operating information (step 402);
- Inputting of authorizing information at the secure device for obtaining of authentication of the user (step 507); wherein the process of obtaining the authentication of the user includes:
- Accepting the authentication password inputted by the user;
- Judging the authentication is OK, if the password is right (step 508);
- Encrypting the operating information (Step 403) and
- Sending the encrypted operating information to the client if the judging result is a YES (step 404).

2. The method according to claim 1, further comprising:
- judging whether according to the received operation command a digital signature on the encrypted operating information is to be signed (step 506);
- If the judging results in a YES, obtaining the authentication of the user (step 507);
- If the authentication is right signing the encrypted operating information with a digital signature; and sending the encrypted operating information with digital signature to the client (step 509).

3. The method according to claim 2, wherein
- Judging the authentication is not OK if the password is wrong;
- Judging whether the count to authenticate the password exceeds a predefined value; and
- Locking the secure device if the Judging is YES.

4. The method according to claim 1, wherein the operating information are displayed on the secure device and / or the operating information are send to the client to be display.

5. The method according to claim 2 wherein:
Convert the inputted operating information or password into character;
Display the said character on the secure device and / or send the said character to the client to display.

6. The method according to claim 1, wherein a related symmetric key is downloaded from a server through the client; said symmetric key is saved onto the client; and the operating information are encrypted by using the said symmetric key.

7. The method according to claim 1, wherein a related encrypted symmetric key is downloaded from a server through the client; the encrypted symmetric key is decrypted to obtain the symmetric key; said symmetric key is saved onto the client; and the operating information is encrypted using the said symmetric key.

8. The method according to claim 2, wherein the symmetric key is deleted after the encrypted operating information with the digital signature is send to the client.

9. The method according to claim 1, wherein the secure device processes operating information to generate the check code for checking the operating information and sends the operating information with said check code to the client.

10. A secure device comprising;
- a receiving unit (101), configured to receive the operation command sent from a client;
- a input unit (102), configured to input operating information according to the operation command;
- a judge unit (103), configured to judge whether a client user confirms the operating information;
- an authentication unit, configured to authenticate the user wherein the authentication includes a second input unit configured to input authentication data;
- an encryption unit (104), configured to encrypt the operating information with a symmetric encryption key if the judge unit results a YES; and
- a sending unit (105), configured to send the encrypted operating information to the client.

11. The secure device according to claim 10 further comprising
- a second judge unit, configured to judge whether to attach a digital signature to the encrypted information;
- the authentication unit, configured to authenticate a user if the second judge unit results a YES, wherein the authentication includes a second input unit configured to input authentication data; and
- a digital signature unit, configured to add a signature to the encrypted information if the authentication was successful;

12. The secure device according to claim 11, wherein said first and second input unit is a keyboard with press key or touch screen.

13. The secure device according to claim 11, wherein the second receiving unit is configured to receive a symmetric key from a server through the client; further comprising a first memory unit configured to save the said symmetric key and said encryption unit configured to encrypt said operating information with said symmetric key.

14. The secure device according to claim 13, further comprising a processing unit, configured to generate checking information based on the inputted information and the sending unit configured to send the operating information and checking information to the client.

## Patentansprüche

1. Verfahren zur Informationsinteraktion, aufweisend die Schritte:
- Empfangen eines Betriebssteuerbefehls von einem Client und Eingeben von Betriebsinformation gemäß dem Betriebssteuerbefehl (Schritt 401) an einem sicheren Endgerät;
- Beurteilen ob ein Benutzer des Clients die Betriebsinformation bestätigt (Schritt 402);
- Eingeben von Autorisierungsinformation an dem sicheren Endgerät zum Erhalten einer Authentifizierung des Benutzers (Schritt 507); wobei der Prozess des Erhaltens der Authentifikation des Benutzers aufweist:
- Akzeptieren des Authentifizierungspassworts eingegeben durch den Benutzer;
- Beurteilen der Authentifikation als OK, falls das Passwort stimmt (Schritt 508);
- Verschlüsseln der Betriebsinformation (Schritt 403) und
- Senden der verschlüsselten Betriebsinformation an den Client falls das Beurteilungsresultat ein JA ist (404).

2. Verfahren nach Anspruch 1, ferner aufweisend:
- Beurteilen, ob gemäß dem empfangenden Betriebssteuerbefehl eine digitale Signatur auf der verschlüsselten Betriebsinformation zu unterzeichnen ist (Schritt 506);
- falls das Beurteilen in einem JA resultiert, Erhalten der Authentifikation des Benutzers (Schritt 507);
- falls die Authentifizierung richtig ist, Unterschreiben der verschlüsselten Betriebsinformation mit einer digitalen Signatur; und Senden der verschlüsselten Betriebsinformation mit einer digitalen Signatur an den Client (Schritt 509).

3. Verfahren gemäß Anspruch 2, wobei
- Beurteilen der Authentifikation als nicht OK falls das Passwort falsch ist;
- Beurteilen ob der Zähler zum Authentifizieren des Passworts einen vorbestimmten Wert überschreitet; und
- Sperren des sicheren Endgeräts, falls das Beurteilen JA ist; erfolgt.

4. Verfahren gemäß Anspruch 1, wobei die Betriebsinformation auf dem sicheren Endgerät angezeigt wird und/oder die Betriebsinformation an den Client zur Darstellung gesendet wird.

5. Verfahren gemäß Anspruch 2, wobei:
Konvertieren der eingegebenen Betriebsinformation oder des Passworts zu Buchstaben;
Anzeigen der Buchstaben auf dem sicheren Endgerät und/oder Senden des Buchstabens an den Benutzer zum Anzeigen.

6. Verfahren gemäß Anspruch 1, wobei ein in Verbindung stehender symmetrischer Schlüssel von einem Server mittels eines Clients heruntergeladen wird; der besagte symmetrische Schlüssel auf dem Client gespeichert wird; und die Betriebsinformation unter Verwendung des symmetrischen Schlüssels verschlüsselt wird.

7. Verfahren gemäß Anspruch 1, wobei ein in Beziehung stehender verschlüsselter symmetrischer Schlüssel von einem Server mittels des Clients heruntergeladen wird; der verschlüsselte symmetrische Schlüssel zum Erhalten des symmetrischen Schlüssels entschlüsselt wird; der symmetrische Schlüssel auf dem Client gespeichert wird; und die Betriebsinformation unter Verwendung des symmetrischen Schlüssels verschlüsselt wird.

8. Verfahren gemäß Anspruch 2, wobei der symmetrische Schlüssel nach einem Senden der verschlüsselten Betriebsinformation mit der digitalen Signatur an den Client gelöscht wird.

9. Verfahren gemäß Anspruch 1, wobei das sichere Endgerät Betriebsinformation zum Generieren eines Prüfcodes zum Prüfen der Betriebsinformation verarbeitet und die Betriebsinformation mit dem Prüfcode an den Client sendet.

10. Sicheres Endgerät, aufweisend;
- eine Empfangseinheit (101), eingerichtet zum Empfangen des Betriebssteuerbefehls, der von einem Client gesendet wurde;
- eine Eingabeeinheit (102), eingerichtet zum Eingeben von Betriebsinformation gemäß dem Betriebssteuerbefehl;
- eine Beurteilungseinheit (103), eingerichtet zum Beurteilen, ob ein Benutzer des Clients die Betriebsinformation bestätigt;
- eine Authentifizierungseinheit, eingerichtet zum Authentifizieren des Benutzers, wobei die Authentifizierung eine zweite Eingabeeinheit eingerichtet zum Eingeben von Authentifizierungsdaten umfasst;
- eine Verschlüsselungseinheit (104), eingerichtet zum Verschlüsseln der Betriebsinformation mit einem symmetrischen Schlüssel, falls die Beurteilungseinheit zu einem JA resultiert; und
- eine Sendeeinheit (105), eingerichtet zum Senden der verschlüsselten Betriebsinformation an den Client.

11. Sicheres Endgeräte gemäß Anspruch 10, ferner umfassend
- eine zweite Beurteilungseinheit, eingerichtet zum Beurteilen, ob eine digitale Signatur an die verschlüsselte Information angehängt wird;
- die Authentifizierungseinheit, eingerichtet zum Authentifizieren eines Benutzers, ob die zweite Beurteilungseinheit zu einem JA resultiert, wobei die Authentifizierung eine zweite Eingabeeinheit eingerichtet zum Eingeben von Authentifizierungsdaten umfasst; und
- eine digitale Signatureinheit, eingerichtet zum Hinzufügen einer Signatur an die verschlüsselte Information, falls die Authentifizierung erfolgreich war.

12. Sicheres Endgerät gemäß Anspruch 11, wobei die erste und zweite Eingabeeinrichtung eine Tastatur mit Tasten oder berührungsempfindlichem Bildschirm ist.

13. Sicheres Endgerät gemäß Anspruch 11, wobei die zweite Empfangseinheit zum Empfangen eines symmetrischen Schlüssels von einem Server mittels des Clients eingerichtet ist; ferner aufweisend eine erste Speichereinheit, eingerichtet zum Speichern des symmetrischen Schlüssels und die Verschlüsselungseinrichtung zum Verschlüsseln der Betriebsinformation mit dem symmetrischen Schlüssel eingerichtet ist.

14. Sicheres Eridgerät gemäß Anspruch 13, ferner aufweisend eine Verarbeitungseinheit, eingerichtet zum Generieren von Prüfinformation basierend auf der eingegebenen Information und der Sendeeinheit eingerichtet zum Senden der Betriebsinformation und zum Prüfen der Information an den Client.

## Revendications

1. Procédé pour l'interaction d'informations comprenant les étapes de procédé :
- la réception d'une commande d'opération en provenance d'un client et l'entrée d'informations d'opération en fonction de ladite commande d'opération (étape 401) au niveau d'un dispositif sécurisé ;
- le jugement de si un utilisateur client confirme les informations d'opération (étape 402) ;
- l'entrée d'informations d'autorisation au niveau du dispositif sécurisé pour l'obtention d'une authentification de l'utilisateur (étape 507) ; où le processus d'obtention de l'authentification de l'utilisateur inclut :
- l'acceptation du mot de passe d'authentification entré par l'utilisateur ;
- le jugement que l'authentification est OK, si le mot de passe est correct (étape 508) ;
- le chiffrement des informations d'opération (étape 403) et
- l'envoi des informations d'opération chiffrées au client si le résultat du jugement est un OUI (étape 404).

2. Procédé selon la revendication 1, comprenant en outre :
- le jugement de si, en fonction de la commande d'opération reçue, une signature numérique sur les informations d'opération chiffrées doit être signée (étape 506) ;
- si le jugement a pour résultat un OUI, l'obtention de l'authentification de l'utilisateur (étape 507) ;
- si l'authentification est correcte, la signature des informations d'opération chiffrées avec une signature numérique ; et l'envoi des informations d'opération chiffrées avec la signature numérique au client (étape 509).

3. Procédé selon la revendication 2, dans lequel
- le jugement de l'authentification n'est pas OK si le mot de passe est incorrect ;
- le jugement de si le compte pour authentifier le mot de passe dépasse une valeur prédéfinie ; et
- le verrouillage du dispositif sécurisé si le jugement est OUI.

4. Procédé selon la revendication 1, dans lequel les informations d'opération sont affichées sur le dispositif sécurisé et/ou les informations d'opération sont envoyées au client pour être affichées.

5. Procédé selon la revendication 2, dans lequel :
convertir les informations d'opération ou le mot de passe entrés en caractère ;
afficher ledit caractère sur le dispositif sécurisé et/ou envoyer ledit caractère au client pour affichage.

6. Procédé selon la revendication 1, dans lequel une clé symétrique liée est téléchargée depuis un serveur par le biais du client ; ladite clé symétrique est sauvegardée sur le client ; et les informations d'opération sont chiffrées en utilisant ladite clé symétrique.

7. Procédé selon la revendication 1, dans lequel une clé symétrique chiffrée liée est téléchargée depuis un serveur par le biais du client ; la clé symétrique chiffrée est déchiffrée pour obtenir la clé symétrique ; ladite clé symétrique est sauvegardée sur le client ; et les informations d'opération sont chiffrées en utilisant ladite clé symétrique.

8. Procédé selon la revendication 2, dans lequel la clé symétrique est supprimée après que les informations d'opération chiffrées avec la signature numérique sont envoyées au client.

9. Procédé selon la revendication 1, dans lequel le dispositif sécurisé traite des informations d'opération pour générer le code de contrôle pour contrôler les informations d'opération et envoie les informations d'opération avec ledit code de contrôle au client.

10. Dispositif sécurisé comprenant :
- une unité de réception (101), configurée pour recevoir la commande d'opération envoyée depuis un client ;
- une unité d'entrée (102), configurée pour entrer des informations d'opération en fonction de la commande d'opération ;
- une unité de jugement (103), configurée pour juger si un utilisateur client confirme les informations d'opération ;
- une unité d'authentification, configurée pour authentifier l'utilisateur, où l'authentification inclut une seconde unité d'entrée configurée pour entrer des données d'authentification ;
- une unité de chiffrement (104), configurée pour chiffrer les informations d'opération avec une clé de chiffrement symétrique si l'unité de jugement a pour résultat un OUI ; et
- une unité d'envoi (105), configurée pour envoyer les informations d'opération chiffrées au client.

11. Dispositif sécurisé selon la revendication 10, comprenant en outre
- une seconde unité de jugement, configurée pour juger si rattacher une signature numérique aux informations chiffrées ;
- l'unité d'authentification, configurée pour authentifier un utilisateur si la seconde unité de jugement a pour résultat un OUI, où l'authentification inclut une seconde unité d'entrée configurée pour entrer des données d'authentification ; et
- une unité de signature numérique, configurée pour ajouter une signature aux informations chiffrées si l'authentification a réussi.

12. Dispositif sécurisé selon la revendication 11, dans lequel lesdites première et seconde unités d'entrée sont un clavier avec touche d'appui ou un écran tactile.

13. Dispositif sécurisé selon la revendication 11, dans lequel la seconde unité de réception est configurée pour recevoir une clé symétrique en provenance d'un serveur par le biais du client ; comprenant en outre une première unité de mémoire configurée pour sauvegarder ladite clé symétrique et ladite unité de chiffrement configurée pour chiffrer lesdites informations d'opération avec ladite clé symétrique.

14. Dispositif sécurisé selon la revendication 13, comprenant en outre une unité de traitement, configurée pour générer des informations de vérification sur la base des informations entrées et l'unité d'envoi configurée pour envoyer les informations d'opération et les informations de vérification au client.
